# EUROPEAN PATENT SPECIFICATION

(11) **EP 3 885 021 B1**
(45) Date of publication and mention of the grant of the patent: **09.10.2024**
(21) Application number: 20166152.7
(22) Date of filing: 27.03.2020
(51) Int. Cl.: B01D 21/00, B03D 1/02, B03D 1/08, B09C 1/02, C10G 1/00, E21B 21/00

(54) **METHOD AND TREATMENT PLANT FOR CLEANING CONTAMINATED MATERIAL**
VERFAHREN UND BEHANDLUNGSANLAGE ZUR REINIGUNG VON KONTAMINIERTEM MATERIAL
PROCÉDÉ ET INSTALLATION DE TRAITEMENT DE NETTOYAGE D'UN MATÉRIAUX CONTAMINÉS

(43) Date of publication of application: 29.09.2021
(73) Proprietor: Bauer Resources GmbH, 86529 Schrobenhausen (DE)
(72) Inventor: RICHTER, Rüdiger B, Abu Dhabi (AE)
(74) Representative: Wunderlich & Heim Patentanwälte PartG mbB

(56) References cited:
- CA-A- 1 164 383
- CA-C- 1 326 571
- CN-A- 108 059 311
- US-A1- 2005 194 292

## Description

The invention relates to a method for cleaning contaminated material comprising mineral components being contaminated with hydrocarbons, wherein a slurry or mud is formed by applying a process liquid to the contaminated material, flotation agents are added to the slurry or mud, and the slurry or mud is treated by at least one flotation step, in which a gas is introduced into the slurry or mud and hydrocarbons are removed from the mineral components by being attached to gas bubbles generated within the slurry or mud in order to form a stable froth at the surface which can be skimmed off according to the preamble of claim 1.

Furthermore, the invention relates to a treatment plant for cleaning contaminated material comprising mineral components being contaminated with hydrocarbons, comprising a device for applying a process liquid to the contaminated material for forming a slurry or mud, a device for adding flotation agents to the slurry or mud, and at least one flotation device, in which a gas is introduced into the slurry or mud and hydrocarbons are removed from the mineral components by the gas which generates bubbles within the slurry or mud, according to the preamble of claim 11.

In particular, the present invention relates to the treatment of hydrocarbon-contaminated soils, particularly from industrial brownfield sites and oil field accidents, but also war damage, oil-contaminated sludge and cuttings, either containing hydrocarbons, but also metals, metalloids and naturally occurring radioactive materials (NORM) or solely hydrocarbons, particularly all types of crude oil, refined petroleum fuels (gasoline and diesel), lubricant base oil types, hydraulic and motor oils, grease but also PAHs (16 EPA PAHs, Coronene C₂₄H₁₂ and other multi-ring aromatic compounds).

Thermal, biological and soil washing processes are generally used for the treatment of hydrocarbon-contaminated soils. In the past, soils but also other mineral wastes such as crushed construction debris (rubble) from former industrial sites, particularly when highly contaminated with polycyclic aromatic hydrocarbons (PAH) and heavy oils have often caused considerable problems for the wet-mechanical processing in soil washing plants. The first application for the treatment of soil, highly contaminated with polycyclic aromatic hydrocarbons (PAHs) via froth flotation in a physico-chemical soil washing facility was installed and commissioned by the inventor in an industrial scale soil washing plant in Germany.

Oily sludge and oily cuttings are commonly treated by thermal desorption, which often is limited owing to relatively high treatment costs and sometimes low throughput rates. Particularly, in indirect fired plants, it is necessary that the hydrocarbons really evaporate and that they can be recovered from the gas stream by recondensing and via scrubbing with process water, accordingly. Consequently, indirect fired thermal desorption is not efficient for heavy crude residues, asphaltenes and waxes, whilst direct fired thermal treatment destructs the hydrocarbons, which in some cases is acceptable as a state-of-the-art treatment.

In US 5,115,986, it is proposed a process for treating soils, contaminated with oil and grease materials containing Pentachlorophenol (PCP). This process concerns the utilization of attrition as a scrubbing step in combination with a classification process. Flotation as a process step is either applied before attrition/classification or after and is not required in all applications. US 5,115,986 is not mentioning any reagent regime such as collecting agents or required frothers and is not emphasizing on specific flotation conditions such as pH, etc.

WO 01/74505 A1 deals with a method for depollution of soils polluted by hydrocarbons. The invention concerns a depollution treatment method for soil, consisting of materials mainly based on sand and/or earth, polluted with hydrocarbons, characterized in that it consists in mixing at ambient temperature said material polluted with hydrocarbons with a hydrogen peroxide solution until an off-gas is released and separating hydrocarbons by flotation. In conclusion, flotation is applied after a pretreatment with hydrogen peroxide solution. Since flotation agents, particularly collectors would be also destructed by the hydrogen peroxide, they are recognizably not applied.

US 5,637,152 proposes an apparatus and method for removing hydrocarbons from soil, where a gradient force machine pulverizes contaminated soil. After mixed with release agents, the mixed soil enters a water-filled separation unit. Counter-rotating augers aid the breakdown of the mixed soil into solid, water and hydrocarbon components. Hydrocarbons, which have floated to the top of the separation unit and washing container are removed by a vacuum system. Apparently, no real flotation process, as commonly understood, is involved.

US 6,036,849 discloses a method of removing hydrocarbons from soils contaminated with various hydrocarbons such as gasoline, diesel fuel, solvents, motor oil and crude oil. The process first screens the soil to remove oversized rocks and debris and to reduce the contaminated soil to uniformly sized particles. The soil particles are moved along a conveyor and first sprayed with an oxidizer diluted with ionized water and then sprayed with only ionized water. The washed particles are then vigorously mixed with their entrained oxidizer and ionized water in an auger mixer for several minutes to oxidize almost all of the remaining hydrocarbons. The washed and hydrocarbon-free soil is then moved by conveyor to a stockpile for storage, testing and drying. This is basically an enhanced soil washing process without any flotation unit.

From US 4,136,014 it is known a method for separation of bitumen from tar sands involving an electric flotation cell formed of a container, in which is placed a charge of unseparated tar sand to a first level and which is then filled with water to a second level and electrodes positioned in the cell in relation to the tar sand, such that on application of a voltage to the electrodes an electric current flows through the tar sand and water. It has been found that after application of the electrical energy to the tar sands agitation and then separation takes place with the bitumen being floated to the upper surface.

US 4,444,260 discloses a process for the treatment of oil contaminated sand to recover oil therefrom. The process involves separating the production fluid from an oil well having sand entrained therein into a plurality of components, one of which comprises an oil-contaminated sand. The contaminated sand is contacted with a light oil solvent to initiate a solvating action of the oil contaminant. The resulting mixture of oil-contaminated sand and solvent is then contacted with water and the system then gravity separated into discrete sand, water and oil phases. The oil and water phases may be removed from the sand and the sand phase again contacted with water and the resulting mixture then subjected to gravity separation to produce separate sand and water phases. The water phase is then removed and the sand passed to a suitable disposal facility. This known process does not involve any flotation step.

From US 4,645,608 it is known a method of treating oil contaminated cuttings comprising the steps of: contacting the oil contaminated cuttings with a detergent solution comprising a solvent and a surfactant selected from the group consisting of alcohol ethoxylates, phenol ethoxylates, alkylphenol ethoxylates, amine ethoxylates, thioethers, and combinations thereof so as to wash the oil from the cuttings and into the detergent solution; and separating the washed cuttings from the detergent solution containing the removed oil. The detergent solution containing the removed oil is optionally recycled back into the drilling mud. Also in this known process a step of flotation is not involved.

CA 1 164 383 A discloses a process for segregation of bitumen, such as tar sand, from a minerals containing mass according to the preamble of claim 1 and claim 10. In contrast to the present invention Naphtha is used as a diluent, thinner or solvent which increases the problem generated by further dilution with hot water. This is considered the main source of environmental damage and criticism by the public. Moreover, CA 1 164 383 A uses agitator-less vessels as flotation cells, were air is bubbled in from an outside source.

It is an **objective** of the present invention to provide a method and a treatment plant for an efficient removal of hydrocarbons from contaminated material, like soils, oily sludge and oily cuttings.

Another objective of the present invention is the recovery of hydrocarbons such as all types of crude oil, refined petroleum fuels (gasoline and diesel), lubricant base oil types, hydraulic and motor oils, grease but also PAHs (16 EPA PAHs, Coronene C₂₄H₁₂ and other multi-ring aromatic compounds) from a mineral matrix as mentioned above.

According to the invention, the objective is solved by a method according to claim 1 and a treatment plant according to claim 11. Preferred embodiments of the invention are stated in the dependent claims.

The inventive method is characterized in that at least one step of centrifugation is carried out, in which hydrocarbons are separated. In general, a separation step by means of a centrifuge enables a significant reduction of the hydrocarbons, even if the centrifugation is carried out before and/or after the flotation step. It was recognized that the combination of the flotation step and a centrifugation step leads to remarkable cleaning results of contaminated mineral components. The decontamination of material by flotation depends on the tendency of gas bubbles to adsorb on the hydrophobe surface of hydrocarbon particles, wherein the gas bubbles with adsorbed hydrocarbons are moved to the top of the slurry or mud. In contrast thereto, a separation by centrifugation depends on a completely different principle of operation. By means of centrifugation forces, mineral components with a higher density are separated from hydrocarbons having a lower density. The combination of these two different principles of separation in one process can lead to an extraordinary cleaning effect of the mineral components.

In particular, the invention relates to a method involving the processes of flotation and centrifugation via decanters/three phase centrifuges in order to perform the separation into hydrocarbons, process liquid/water and solids.

In general, the step of centrifugation could be carried out with any suitable centrifugation device. According to the invention, it is stated that the step of centrifugation is carried out by means of a three phase centrifuge, by which process liquid, hydrocarbons and remaining mineral components are separated.

According to a variant of the inventive method it is preferred that the step of centrifugation is carried out before and/or after a first step of flotation. If the centrifugation is carried out in advance, a first separation step is carried out, in which rough hydrocarbon particles are separated. This enables better results in a following flotation step.

If the centrifugation is carried out after the step of flotation, contaminating particles being only partly released from mineral particles could be fully released and removed under the physical forces of centrifugation. In a preferred variation, the step of centrifugation could be carried out before and after the step of flotation.

The degree of cleaning of the contaminated material can be further enhanced in that the step of centrifugation and the step of flotation are carried out repeatedly by circulating at least a part of the slurry or mud through the step of centrifugation and the step of flotation. The higher the number of cycles of centrifugation and flotation, the higher the degree of cleaning.

In general, any suitable liquid could be used as a process liquid. A particularly economic method is achieved in that water is used as a process liquid. A further enhanced cleaning effect can be achieved according to another advantageous variation of the invention in that the process liquid is applied to the contaminated material as heated steam or heated water. A higher temperature of the process liquid allows a better solving or releasing of the hydrocarbons from the surface of the mineral particles. Preferably, the process liquid comprises a temperature between 30°C and 80°C.

If steam is used, it is advantageous that the steam is applied to the mineral component with a certainpressure, preferably between 1bar to 10bar.

The cleaning effect can be further increased according to another variation of the inventive method, if a pH-value of the slurry or mud is adjusted to an alkaline value range above pH 7. Preferably the alkaline value lies in a range between pH 7.5 and pH 10.

A further increased cleaning effect according to another embodiment of the invention is achieved in that the contaminated material is grinded before or during applying of the process liquid. Preferably, the contaminated material is grinded for getting an average particle size of less than 1 mm, preferably about 0.1 mm. The grinding step can be carried out with suitable grinding devices, for example with grinding rolls / pan mill.

The process itself applies either initially flotation, using either hot water or water at ambient temperature as a process liquid and in particular suitable collectors (non-polar hydrocarbons mixed with alcohols and esters) as flotation agents in combination with petro diesel, fatty-acid methyl esters (FAMEs) and similar substances, and is then followed by a further treatment using centrifugation. In case of pourable semi-liquid sludge types, the treatment occurs first with a decanter or a three-phase-centrifuge and after that the segregated solids are undergoing a further downstream flotation process using the same conditions and flotation agents as described above. Oversize grains will be screened and/or ground prior to the above treatment steps either with the support of steam or without.

A wet-mechanical treatment, involving flotation and centrifugation, as proposed by the invention, is an economic and ecological alternative for the cleaning of sludge and cuttings, but also applicable for the above mentioned soil.

The inventive treatment plant for cleaning contaminated material is characterized in that at least one centrifugation device is provided, by which hydrocarbons are separated. By this inventive treatment plant, the inventive method as described above, can be performed. Accordingly, the use of the treatment plant can provide the advantages as described above.

For a highly economic treatment plant, the centrifugation device is a three phase centrifuge. A three phase centrifuge can be designed in particular as a so-called decanter. By such a device, three different phases can be separated, in particular process liquid, mineral particles and the contaminating compounds.

For an enhanced separation of cleaned mineral components and released hydrocarbons according to an embodiment of the invention, the centrifugation device is arranged in a direction of flow after the flotation device.

According to an additional or alternative arrangement, the centrifugation device is arranged in the direction flow before the flotation device. The centrifugation device can be used for pretreating the contaminated material, wherein better cleaning effects can be achieved for the solids in a subsequent flotation step.

Another preferred embodiment of the invention lies in that a recirculation line is provided, by which at least part of the slurry or mud treated in the flotation device is recirculated back into the centrifugation device for a further step of centrifugation. After the flotation device, a detection means is positioned, by which the degree of cleaning or the percentage of content of still contaminated particles is detected. By the detection means a valve can be operated to redirect not sufficiently cleaned material back to the centrifugation device and/or the flotation device. Sufficiently cleaned material is allowed to leave the separation arrangement.

The invention is further described with reference to preferred embodiments being shown schematically in the enclosed drawings. In the drawings is shown:
- Fig. 1: a schematic side view of a first embodiment of an inventive treatment plant;
- Fig. 2: a schematic flow diagram for another arrangement of an inventive treatment plant; and
- Fig. 3: a schematic flow diagram of a third arrangement of an inventive treatment plant.

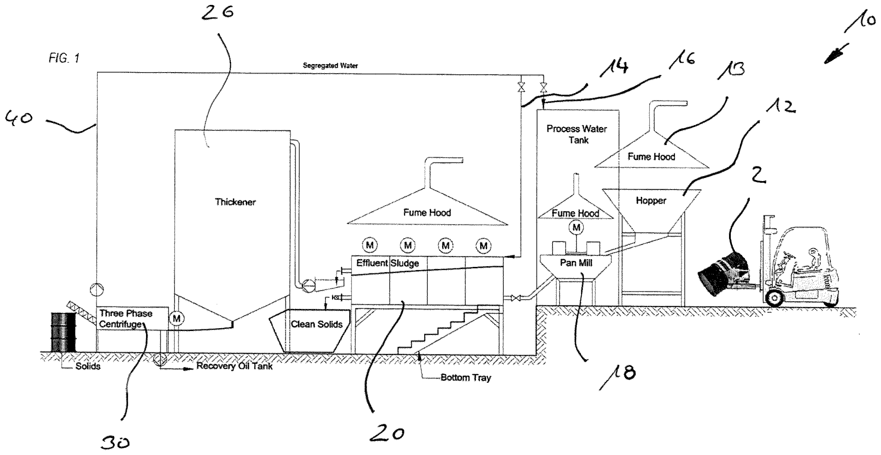

Referring to FIG. 1, which illustrates a first preferred embodiment of an invention treatment plant 10 for the treatment of a contaminated material 2, in particular non-pourable (solidified) hydrocarbon sludge, oily cuttings and hydrocarbon-contaminated soil with a moderate hydrocarbon content and a high mineral phase. The hydrocarbon-containing (waste) material is introduced to the preferred embodiment either as a bulky material with a wheel loader or from storage drums via fork lift truck (equipped with a tilter) into a hopper 12 with a fume hood 13, either with or without a grizzly for the separation of oversize grains. The material can be milled or ground by a mill 18 prior to the treatment by flotation 20 in order to be reduced to smaller particles. For forming a slurry or mud with a sufficient flowability water as a process liquid is added by devices 14/16.

Further to FIG. 1 a step of flotation involves the three phases gas bubbles (air), liquid and solids for the separation process and is using particularly for the segregation of hydrocarbons either hot water or water at ambient temperature as a process liquid. The method is, for example by applying suitable collectors (non-polar hydrocarbons mixed with alcohols and esters) as flotation agents included but not limited to a combination with petro diesel, fatty-acid methyl esters (FAMEs) and similar substances, preferably in an akaline pH range, having a pH greater than 7. Diesel fraction, if available as a by-product or intentionally added, acts as an additional collector for PAHs and heavy TPH fractions . Also, adequate organic flotation frothers, with a molecular structure similar to collectors such as pine oil, long-chain alcohols and polyoxypropylene derivates may be applied.

The flotation device 20 comprises either a series of square/rectangular or circular shaped flotation cells, operated either in series or in parallel, where the required air, for generating the transport bubbles, is either introduced to the pulped slurry or mud (contaminated material/water mixture) via the suction of the agitator (self-aerating) or from an external source (forced flotation). Material disintegration and required shear forces for that, are either provided by the cell itself or by an attrition cell with agitators. The cell to cell transport of the pulped slurry or mud either occurs by gravity or by suction of the agitator and is released from the last cell as a treated (clean) mineral output material (sandy tailings), for reuse, disposal or in case of decontaminated soil for re-installation at the remediation site.

In addition, the treated mineral particle fraction maybe be treated further, in order to remove coarse impurities, which are carrier of remaining contamination, such as coaled particles or fibers, tar pellets and small plastic pieces, etc., which works very well in an upstream sorter (mono sizer) and in particular, when the sand with the coarse impurities already was hydrophobized by the flotation reagents, earlier. The highly hydrocarbon enriched effluent from the flotation device 20, which was separated from the mineral phase (sandy tailings), is either thickened by a thickener 26 prior to centrifugation or is directly sent to a centrifugation device 30, where the hydrocarbons are segregated at temperatures of about 60 up to 80°C from the remaining water and the remaining solids. The remaining water can be directed back to the device 14 via recirculation line 40.

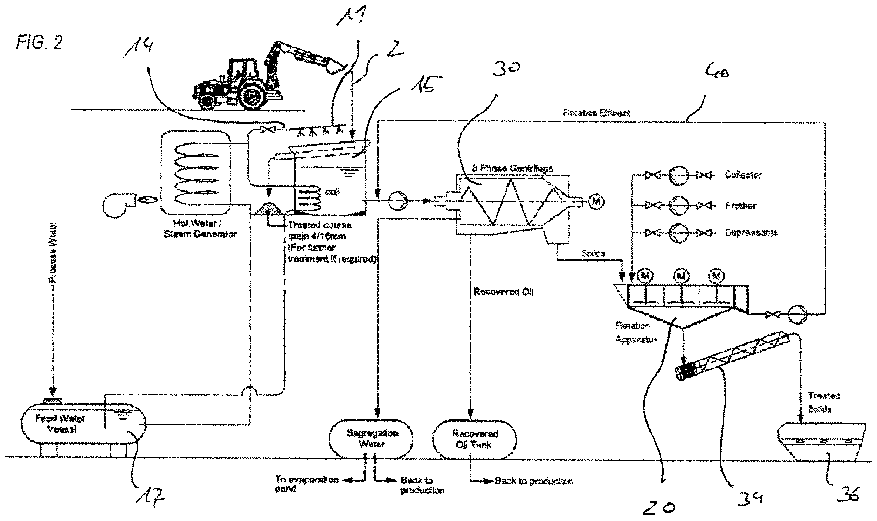

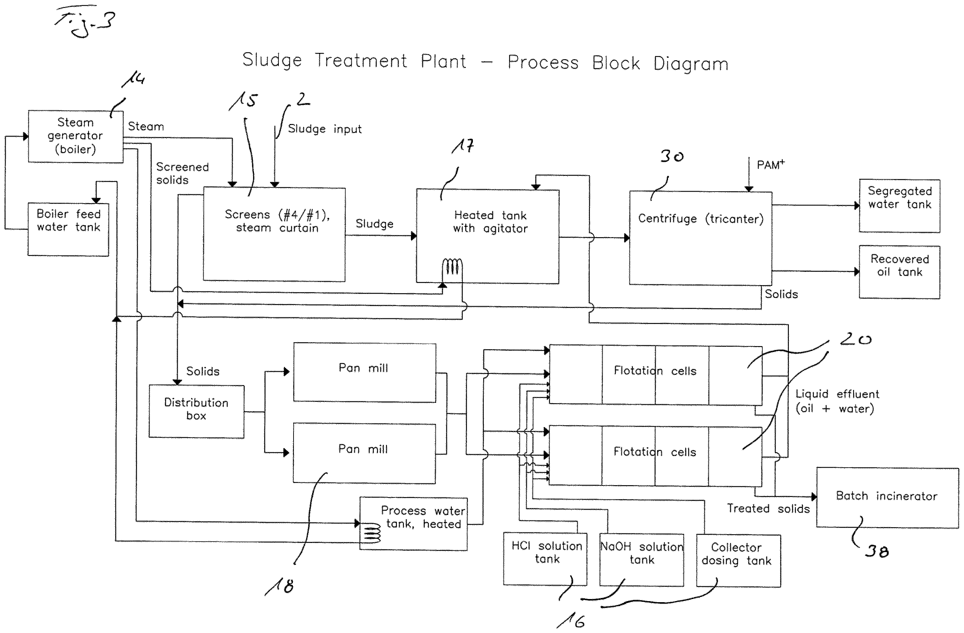

Referring to FIG. 2, which illustrates a second preferred embodiment of a treatment plant 10 for the treatment of oily sludge and soil with a high hydrocarbon content of about 10 M-% (100,000 mg/kg) and above, which by device 14 applies a steam and hot water-supported 11 vibrating screen 15 (with one or more screening levels), were the contaminated material 2 is introduced by a shell gripper, wheel loader or from drums via forklift (with tilter). Oversize grain, which is not clean, maybe ground and treated by the same preferred embodiment, as well (see FIG. 3). The screened and heated, less viscid hydrocarbon sludge/water mixture including solids up to 2 mm is pumped either directly from the heated screen 15 with bottom tank to a centrifugation device 30 or into a heated receiver tank/stirrer vessel 17. The centrifugation device 30 is either a three phase centrifuge or a decanter in combination with a stack centrifuge, capable to segregate the process liquid (water), solids and the hydrocarbons for recovery. The centrifugation process works at temperatures of about 60 up to 80°C. In order to get a better segregation of the solids a cationic auxiliary flocculant, which promotes the coagulation, means the clumping of fine particles into larger flocs, maybe added (see FIG. 3)

Since the solids, after this treatment are commonly not clean, a downstream flotation process in a flotation device 20, as described above is added to the arrangement. Sufficiently treated solids may exit the flotation device 20 and can be conveyed by a conveyer 34 to a container 36.

The main difference between the technical arrangement shown in to FIG. 1 in comparison to FIG. 2 is the arrangement of the flotation device 20, which is either upstream of the centrifugation device 30 (FIG. 1) or downstream of the centrifugation device 30 (see FIG. 3).

FIG. 3 also illustrates a third preferred embodiment for the treatment of oily sludge, and soil with a high hydrocarbon content as it is applied by the assignee, similar to the arrangement shown in FIG. 2. In case that the concentration values of the decontaminated material do not comply with the threshold values for a re-installation at the remediation site, a small batch incinerator 38 is added to the arrangement as a back-up, only to be applied if required.

## Claims

1. Method of cleaning contaminated material (2) comprising mineral components being contaminated with hydrocarbons, wherein
- a slurry or mud is formed by applying a process liquid to the contaminated material (2),
- -flotation agents are added to the slurry or mud in a flotation device (20) comprising either a series of square/rectangular or circular shaped flotation cells, operated either in series or in parallel,
- the slurry or mud is treated by at least one froth flotation step, in which a gas is introduced into the slurry or mud, preferably via the suction of an agitator, and hydrocarbons are removed from mineral components by being attached to gas bubbles generated within the slurry or mud in order to form a stable froth at the surface which can be skimmed off, accordingly,
- at least one step of centrifugation of the skimmed off stable froth is carried out, in which hydrocarbons are separated the method being **characterized in that**
- the step of centrifugation is carried out by means of a three-phase-centrifuge at a temperature between 60-80°C, by which process liquid, hydrocarbons and remaining mineral components are separated.

2. Method according to claim 1,
**characterized in that**
the step of centrifugation is carried out before and/or after a first step of flotation.

3. Method according to any one of the claims 1 to 2,
**characterized in that**
the step of centrifugation and the step of flotation are carried out repeatedly by recirculating at least a part of the slurry or mud through the step of centrifugation and the step of flotation.

4. Method according to any one of claims 1 to 3,
**characterized in that**
water is used as a process liquid.

5. Method according to any one of the claims 1 to 4,
**characterized in that**
the process liquid is applied to the contaminated material (2) as heated steam or heated water.

6. Method according to any one of the claims 1 to 5,
**characterized in that**
a pH-value of the slurry or mud is adjusted to an alkaline-value range above pH 7.

7. Method according to any one of the claims 1 to 6,
**characterized in that**
the contaminated material (2) is grinded before or during applying of the process liquid.

8. Method according to any one of the claims 1 to 7,
**characterized in that**
the flotation agent comprises collectors, frothers and/or depressants.

9. Method according to any one of the claims 1 to 8,
**characterized in that**
in the froth flotation step, a gas is introduced into the slurry or mud from an external source.

10. Treatment plant for cleaning contaminated material (2) comprising mineral components being contaminated with hydrocarbons, in particular according to a method corresponding to any one of the claims 1 to 9, comprising
a device for applying a process liquid (14) to the contaminated material (2) for forming a slurry or mud,
the treatment plant is further provided with:
a device for adding flotation agents (16) to the slurry or mud,
at least one froth flotation device (20) comprising either a series of square/rectangular or circular shaped flotation cells, operated either in series or in parallel, in which a gas is introduced into the slurry or mud, preferably via the suction of an agitator, and hydrocarbons are removed from mineral components by the gas which generates bubbles within the slurry or mud,
means for skimming off a stable froth on the surface of the slurry or mud, and at least one centrifugation device (30) which is provided for centrifugation of the skimmed off froth, by which hydrocarbons are separated from solids and/or process liquid, **characterized in that**
the centrifugation device (30) is a three-phase-centrifuge or a decanter combined with a stack centrifuge, capable to segregate the process liquid, solids and the hydrocarbons for recovery at temperatures of about 60 up to 80°C.

11. Treatment plant according to claim 9 or 10,
**characterized in that**
the centrifugation device (30) is arranged in a direction of flow after the flotation device (20).

12. Treatment plant according to any one of the claims 10 to 11,
**characterized in that**
the centrifugation device (30) is arranged in the direction of flow before the flotation device (20).

13. Treatment plant according to any one of the claims 10 to 12,
**characterized in that**
a recirculation line (40) is provided, by which at least part of the slurry or mud treated in the flotation device (20) is recirculated back into the centrifugation device (30) for a further step of centrifugation.

14. Treatment plant according to any one of the claims 10 to 13,
**characterized in that**
the froth flotation device (20) further comprises an external source for introducing a gas into the slurry or mud.

## Patentansprüche

1. Verfahren zum Reinigen von kontaminiertem Material (2), welches Mineralkomponenten umfasst, welche mit Kohlenwasserstoffen kontaminiert sind, wobei
- eine Aufschlämmung oder ein Schlamm durch Zuführen einer Prozessflüssigkeit zu dem kontaminierte Material (2) gebildet wird,
- Flotationsmittel zu der Aufschlämmung oder dem Schlamm in einer Flotationsvorrichtung (20) gegeben werden, welche entweder eine Reihe von quadratischen/rechteckigen oder kreisförmigen Flotationszellen umfasst, welche entweder in Reihe oder parallel betrieben werden,
- die Aufschlämmung oder der Schlamm durch zumindest einen Schaumflotationsschritt behandelt werden, in dem ein Gas in die Aufschlämmung oder den Schlamm, vorzugsweise über die Saugwirkung eines Rührwerks eingeleitet wird und Kohlenwasserstoffe von den Mineralkomponenten entfernt werden, indem sie an Gasblasen haften, welche innerhalb der Aufschlämmung oder dem Schlamm generiert werden, um einen stabilen Schaum an der Oberfläche zu bilden, welcher dementsprechend abgeschöpft werden kann,
- mindestens ein Zentrifugierschritt des abgeschöpften stabilen Schaums durchgeführt wird, in welchem die Kohlenwasserstoffe abgetrennt werden, wobei das Verfahren
**dadurch gekennzeichnet ist,**
- **dass** der Zentrifugierschritt mittels einer Dreiphasenzentrifuge bei einer Temperatur zwischen 60°C bis 80°C durchgeführt wird, wobei hierdurch Prozessflüssigkeit, Kohlenwasserstoffe und verbleibende Mineralkomponenten abgetrennt werden.

2. Verfahren nach Anspruch 1,
**dadurch gekennzeichnet,**
**dass** der Zentrifugierschritt vor und/oder nach einem ersten Flotationsschritt durchgeführt wird.

3. Verfahren nach Anspruch 1 oder 2,
**dadurch gekennzeichnet,**
**dass** der Zentrifugationsschritt und der Flotationsschritt wiederholt durchgeführt werden, indem zumindest ein Teil der Aufschlämmung oder des Schlamms durch den Zentrifugierschritt und den Flotationsschritt rezirkuliert wird.

4. Verfahren nach einem der Ansprüche 1 bis 3,
**dadurch gekennzeichnet,**
**dass** Wasser als Prozessflüssigkeit eingesetzt wird.

5. Verfahren nach einem der Ansprüche 1 bis 4,
**dadurch gekennzeichnet,**
**dass** die Prozessflüssigkeit als erhitzter Dampf oder erhitztes Wasser dem kontaminierte Material (2) zugeführt wird.

6. Verfahren nach einem der Ansprüche 1 bis 5,
**dadurch gekennzeichnet,**
**dass** ein pH-Wert der Aufschlämmung oder des Schlamms auf einen alkalischen Wertebereich über pH 7 eingestellt wird.

7. Verfahren nach einem der Ansprüche 1 bis 6,
**dadurch gekennzeichnet,**
**dass** das kontaminierte Material (2) vor oder während des Zuführens der Prozessflüssigkeit gemahlen wird.

8. Verfahren nach einem der Ansprüche 1 bis 7,
**dadurch gekennzeichnet,**
**dass** das Flotationsmittel Sammler, Schaumbildner und/oder Depressoren umfasst.

9. Verfahren nach einem der Ansprüche 1 bis 8,
**dadurch gekennzeichnet,**
**dass** in dem Schaumflotationsschritt ein Gas aus einer externen Quelle in die Aufschlämmung oder den Schlamm eingeleitet wird.

10. Aufbereitungsanlage zum Reinigen von kontaminiertem Material (2), umfassend Mineralkomponenten, welche mit Kohlenwasserstoffen kontaminiert sind, insbesondere nach einem Verfahren entsprechend einem der Ansprüche 1 bis 9, umfassend
eine Vorrichtung zum Zuführen einer Prozessflüssigkeit (14) zu dem kontaminierten Material (2) zur Bildung einer Aufschlämmung oder eines Schlamms, wobei die Aufbereitungsanlage ferner versehen ist mit:
einer Vorrichtung zum Hinzufügen von Flotationsmitteln (16) zu der Aufschlämmung oder dem Schlamm,
zumindest einer Schaumflotationsvorrichtung (20), umfassend entweder eine Reihe von quadratischen (rechteckigen) oder kreisförmigen Flotationszellen, welche entweder in Reihe oder parallel betrieben werden, in die ein Gas in die Aufschlämmung oder den Schlamm eingeleitet wird, vorzugsweise durch das Ansaugen eines Rührwerks, und Kohlenwasserstoffe durch das Gas aus den Mineralkomponenten entfernt werden, wodurch Blasen in der Aufschlämmung oder dem Schlamm erzeugt werden,
Mittel zum Abschöpfen eines stabilen Schaums an der Oberfläche der Aufschlämmung oder des Schlamms, und
zumindest eine Zentrifugiervorrichtung (30), welche vorgesehen ist, um den abgeschöpften Schaum zu zentrifugieren, wodurch Kohlenwasserstoffe von Feststoffen und/oder Prozessflüssigkeit getrennt werden,
**dadurch gekennzeichnet,**
**dass** die Zentrifugiervorrichtung (30) eine Dreiphasenzentrifuge oder ein Dekanter kombiniert mit einer Stapelzentrifuge ist, welche in der Lage ist, die Prozessflüssigkeit, die Feststoffe und die Kohlenwasserstoffe zur Rückgewinnung bei Temperaturen von etwa 60°C bis 80°C zu trennen.

11. Aufbereitungsanlage nach Anspruch 9 oder 10,
**dadurch gekennzeichnet,**
**dass** die Zentrifugiervorrichtung (30) in Strömungsrichtung nach der Flotationsvorrichtung (20) angeordnet ist.

12. Aufbereitungsanlage nach einem der Ansprüche 10 bis 11,
**dadurch gekennzeichnet,**
**dass** die Zentrifugiervorrichtung (30) in der Strömungsrichtung vor der Flotationsvorrichtung (20) angeordnet ist.

13. Aufbereitungsanlage nach einem der Ansprüche 10 bis 12,
**dadurch gekennzeichnet,**
**dass** eine Rezirkulationsleitung (40) vorgesehen ist, durch die zumindest ein Teil der in der Flotationsvorrichtung (20) aufbereiteten Aufschlämmung oder des Schlamms zurück in die Zentrifugiervorrichtung (30) für einen weiteren Zentrifugierschritt zurückgeführt wird.

14. Aufbereitungsanlage nach einem der Ansprüche 10 bis 13,
**dadurch gekennzeichnet,**
**dass** die Schaumflotationsvorrichtung (20) ferner eine externe Quelle zum Einleiten von Gas in die Aufschlämmung oder den Schlamm umfasst.

## Revendications

1. Procédé de nettoyage d'un matériau contaminé (2) comprenant des constituants minéraux étant contaminés avec des hydrocarbures, dans lequel
- une bouillie ou boue est formée en appliquant un liquide de processus au matériau contaminé (2),
- des agents de flottation sont ajoutés à la bouillie ou boue dans un dispositif de flottation (20) comprenant une série de cellules de flottation de forme soit carrée/rectangulaire soit circulaire, fonctionnant soit en série soit en parallèle,
- la bouillie ou boue est traitée par au moins une étape de flottation par mousse, dans laquelle un gaz est introduit dans la bouillie ou boue, de préférence via l'aspiration d'un agitateur, et
des hydrocarbures sont retirés des constituants minéraux en étant fixés à des bulles de gaz générées dans la bouillie ou boue afin de former une mousse stable à la surface qui peut être écumée, en conséquence,
- au moins une étape de centrifugation de la mousse stable écumée est réalisée, dans laquelle des hydrocarbures sont séparés, le procédé étant **caractérisé en ce que**
- l'étape de centrifugation est réalisée au moyen d'une centrifugeuse à trois phases à une température entre 60 et 80 °C, par laquelle un liquide de processus, des hydrocarbures et les constituants minéraux restants sont séparés.

2. Procédé selon la revendication 1,
**caractérisé en ce que**
l'étape de centrifugation est réalisée avant et/ou après une première étape de flottation.

3. Procédé selon l'une quelconque des revendications 1 ou 2,
**caractérisé en ce que**
l'étape de centrifugation et l'étape de flottation sont réalisées à plusieurs reprises en faisant recirculer au moins une partie de la bouillie ou boue par le biais de l'étape de centrifugation et de l'étape de flottation.

4. Procédé selon l'une quelconque des revendications 1 à 3,
**caractérisé en ce que**
de l'eau est utilisée en tant qu'un liquide de processus.

5. Procédé selon l'une quelconque des revendications 1 à 4,
**caractérisé en ce que**
le liquide de processus est appliqué au matériau contaminé (2) en tant que vapeur chauffée ou eau chauffée.

6. Procédé selon l'une quelconque des revendications 1 à 5,
**caractérisé en ce que**
une valeur de pH de la bouillie ou boue est ajustée jusqu'à une plage de valeurs alcalines au-dessus du pH 7.

7. Procédé selon l'une quelconque des revendications 1 à 6,
**caractérisé en ce que**
le matériau contaminé (2) est moulu avant ou pendant l'application du liquide de processus.

8. Procédé selon l'une quelconque des revendications 1 à 7,
**caractérisé en ce que**
l'agent de flottation comprend des collecteurs, des moussants et/ou des déprimants.

9. Procédé selon l'une quelconque des revendications 1 à 8,
**caractérisé en ce que**
à l'étape de flottation par mousse, un gaz est introduit dans la bouillie ou boue à partir d'une source externe.

10. Installation de traitement pour nettoyer un matériau contaminé (2) comprenant des constituants minéraux étant contaminés avec des hydrocarbures, en particulier selon un procédé correspondant à l'une quelconque des revendications 1 à 9, comprenant un dispositif pour appliquer un liquide de processus (14) au matériau contaminé (2) pour former une bouillie ou boue,
l'installation de traitement est en outre dotée de :
un dispositif pour ajouter des agents de flottation (16) à la bouillie ou boue,
au moins un dispositif de flottation (20) par mousse comprenant une série de cellules de flottation de forme soit carrée/rectangulaire soit circulaire, fonctionnant soit en série soit en parallèle, dans lesquelles un gaz est introduit dans la bouillie ou boue, de préférence via l'aspiration d'un agitateur,
et des hydrocarbures sont retirés de constituants minéraux par le gaz, qui génère des bulles dans la bouillie ou boue,
des moyens pour écumer une mousse stable sur la surface de la bouillie ou boue, et
au moins un dispositif de centrifugation (30) qui est fourni pour une centrifugation de la mousse écumée, par laquelle des hydrocarbures sont séparés de solides et/ou d'un liquide de processus, **caractérisée en ce que**
le dispositif de centrifugation (30) est une centrifugeuse à trois phases ou un décanteur combiné à une centrifugeuse à empilement, capable d'isoler les uns des autres le liquide de processus, des solides et les hydrocarbures pour une récupération à des températures d'environ 60 jusqu'à 80 °C.

11. Installation de traitement selon la revendication 9 ou 10,
**caractérisée en ce que**
le dispositif de centrifugation (30) est agencé dans une direction d'écoulement après le dispositif de flottation (20).

12. Installation de traitement selon l'une quelconque des revendications 10 à 11,
**caractérisée en ce que**
le dispositif de centrifugation (30) est agencé dans la direction d'écoulement avant le dispositif de flottation (20).

13. Installation de traitement selon l'une quelconque des revendications 10 à 12,
**caractérisée en ce que**
une ligne de recirculation (40) est fournie, par laquelle au moins une partie de la bouillie ou boue traitée dans le dispositif de flottation (20) est remise en circulation dans le dispositif de centrifugation (30) pour une étape de centrifugation supplémentaire.

14. Installation de traitement selon l'une quelconque des revendications 10 à 13,
**caractérisée en ce que**
le dispositif de flottation (20) par mousse comprend en outre une source externe pour introduire un gaz dans la bouillie ou boue.
